# EUROPEAN PATENT APPLICATION

(11) **EP 2 595 335 A1**
(43) Date of publication of application: **22.05.2013**
(21) Application number: 12182330.6
(22) Date of filing: 30.08.2012
(51) Int. Cl.: H04L 1/00, H04L 1/24, H04L 5/14, H04L 7/10, H04N 21/4363, G09G 5/00

(54) **Bidirectional communication interface apparatus, transmitter apparatus, receiver apparatus, signal transfer method, and signal transfer system**

(30) Priority: 17.11.2011 JP 2011251940
(71) Applicant: Kabushiki Kaisha Toshiba, Tokyo 105-8001 (JP)
(72) Inventor: Suzuki, Nobuaki, Tokyo, 105-8001 (JP); Doi, Takashi, Tokyo, 105-8001 (JP); Mawatari, Masahiko, Tokyo, 105-8001 (JP)
(74) Representative: Henkel, Breuer & Partner

(57) **Abstract**

According to one embodiment, a bidirectional communication interface apparatus (101) characterized by including, a first transfer path (CHO, CH1, CH2) configured to guide a video signal and a control signal transferred according to a first transfer method or a second transfer method different from the first transfer method, from a transmitting-side apparatus to a receiving-side apparatus, a second transfer path (CK) provided independently from the first transfer path and configured to guide a clock signal from the transmitting-side apparatus to the receiving-side apparatus independently from the first transfer path, and a third transfer path (HPD/RSV) provided independently from the first transfer path, is integrated with the second transfer path, and configured to transfer a predetermined signal from the transmitting-side apparatus to the receiving-side apparatus or from the receiving-side apparatus to the transmitting-side apparatus, characterized in that the predetermined signal is transferred in a manner that possibility of transfer of a video signal in accordance with the second transfer method can be detected by receiving the predetermined signal which is supplied to a connection section of the third transfer path of the receiving-side apparatus through the second transfer path from the transmitting-side apparatus, is output from an output end of the second transfer path of the receiving-side apparatus, and is input to a connection section of the second transfer path of the transmitting-side apparatus.

## Description

Embodiments described herein relate generally to a bidirectional communication interface apparatus, a transmitter apparatus, a receiver apparatus, a signal transfer method, and a signal transfer system an electronic device and a control method thereof.

A high-definition digital media interface (HDMI) cable or an optical cable is widely used as a bidirectional communication interface apparatus.

In connection using the HDMI, the HDMI Audio Return Channel Version 1.4 (HDMI-ARC) improved in transfer of audio signals and the HDMI Ethernet Channel (HDC) Version 1.4 capable of exchanging control signals through the Ethernet (registered trademark) have been established.

In accordance with a demand for a much faster transfer speed (transfer capacity) or for a longer transfer distance (transferable range), a cable capable of high-speed communication similar to the Gigabit Ethernet (10GbE) standardized under the Institute of Electrical and Electronics Engineers (IEEE) 802.3ae has already been practiced with respect to unidirectional communication.

A general architecture that implements the various features of the embodiments will now be described with reference to the drawings. The drawings and the associated descriptions are provided to illustrate the embodiments and not to limit the scope of the invention.
FIG. 1 is an exemplary diagram showing an example of a bidirectional-communication interface apparatus according to an embodiment;
FIG. 2 is an exemplary diagram showing an example of the bidirectional-communication interface apparatus according to an embodiment;
FIG. 3 is an exemplary diagram showing an example of flow of signals transferred by the bidirectional-communication interface apparatus according to an embodiment;
FIG. 4 is an exemplary diagram showing an example of inspection of flow of signals transferred by a bidirectional-communication interface apparatus according to an embodiment;
FIG. 5 is an exemplary diagram showing an example of a bidirectional-communication interface apparatus according to an embodiment;

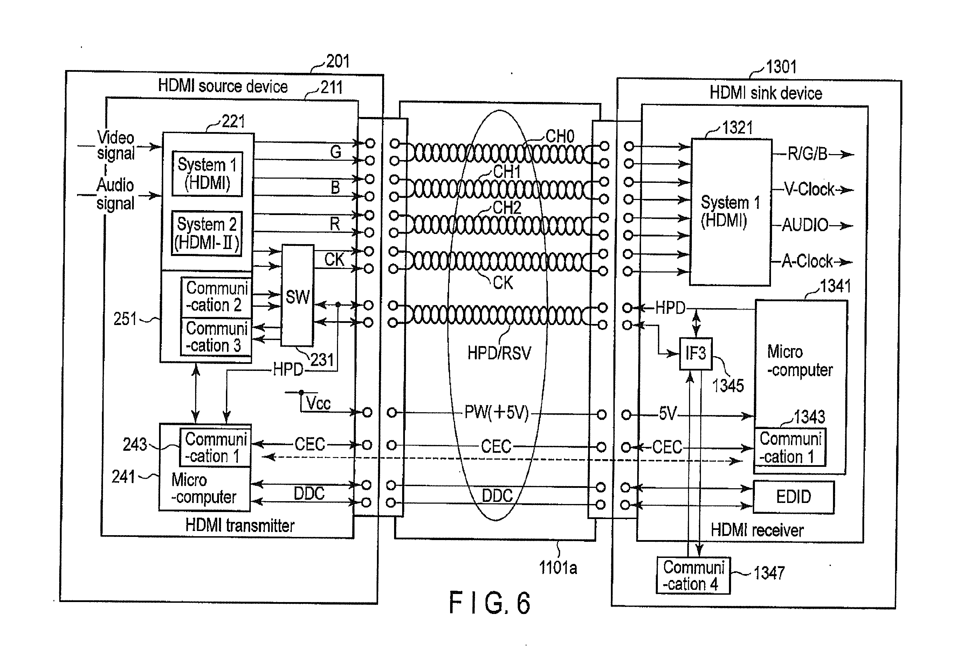

FIG. 6 is an exemplary diagram showing an example of a bidirectional-communication interface apparatus according to an embodiment;
FIG. 7 is an exemplary diagram showing an example of a transfer method for a bidirectional-communication interface apparatus according to an embodiment;
FIG. 8 is an exemplary diagram showing an example of a transfer method for a bidirectional-communication interface apparatus according to an embodiment; and
FIG. 9 is an exemplary diagram showing an example of a bidirectional-communication interface apparatus according to an embodiment.

Various embodiments will be described hereinafter with reference to the accompanying drawings.

In general, according to one embodiment, a bidirectional communication interface apparatus characterized by comprising: a first transfer path configured to guide a video signal and a control signal transferred according to a first transfer method or a second transfer method different from the first transfer method, from a transmitting-side apparatus to a receiving-side apparatus; a second transfer path provided independently from the first transfer path and configured to guide a clock signal from the transmitting-side apparatus to the receiving-side apparatus independently from the first transfer path; and a third transfer path provided independently from the first transfer path, is integrated with the second transfer path, and configured to transfer a predetermined signal from the transmitting-side apparatus to the receiving-side **characterized in that** the predetermined signal is transferred in a manner that possibility of transfer of a video signal in accordance with the second transfer method can be detected by receiving the predetermined signal which is supplied to a connection section of the third transfer path of the receiving-side apparatus through the second transfer path from the transmitting-side apparatus, is output from an output end of the second transfer path of the receiving-side apparatus, and is input to a connection section of the second transfer path of the transmitting-side apparatus.

Embodiments will now be described hereinafter in detail with reference to the accompanying drawings

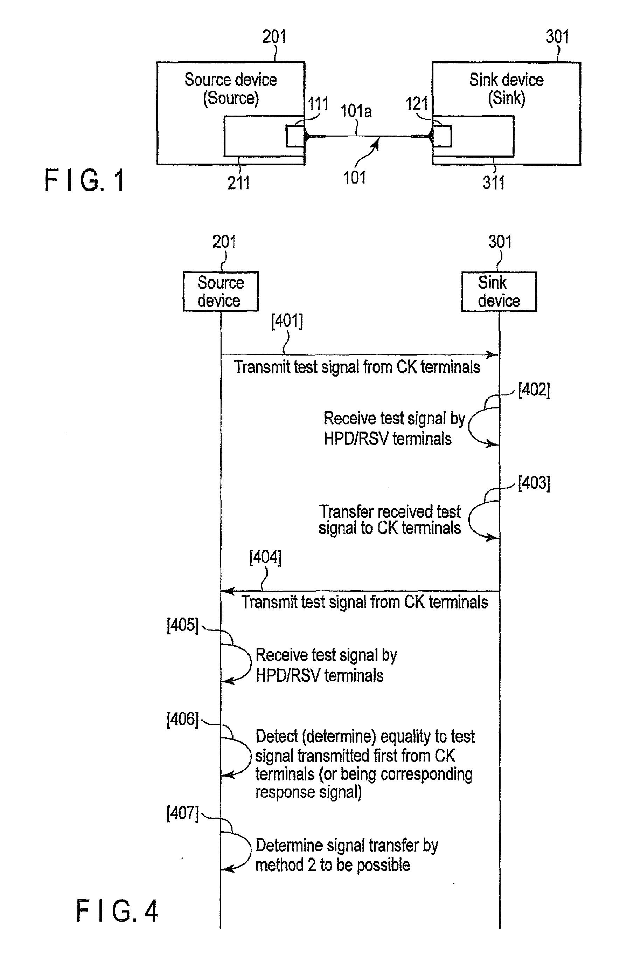

FIG. 1 shows an example of a bidirectional-communication interface system to which an embodiment is applied. It is to be noted that elements or structures described below may be realized by hardware or realized by software by use of a microcomputer (central processing unit [CPU]), i.e., a processor or the like.

A bidirectional communication interface 101 comprises a signal transfer path or, namely, a cable body 101a, a first connector (in a source device side) 111 connected to a source device 201, and a connector (in a sink device side) 12 connected to a sink device 301. The source device 201 comprises an interface section (receptacle [apparatus-side connector]) 211 connected to the first connector 111 of the bidirectional communication interface 101. The sink device 301 comprises an interface section (receptacle [apparatus-side connector]) 311 connected to the first connector 121 of the bidirectional communication interface 101.

The source device 201 comprises a recorder apparatus which records and/or reproduces, for example, video signals and audio signals of content or, namely, programs, a player apparatus capable of only reproducing content, a game apparatus, or a video camera. The source device 201 can alternatively be a personal computer (PC) or may be, for example, a data reproduction apparatus (optical disc drive) which reproduces data (content) stored in an optical disc in accordance with DVD/CD standards, such as a reader/writer (data reproduction apparatus) capable of reading data (content) from a solid-state drive (SSD), a mobile terminal apparatus, a digital camera, or a mobile phone comprising a memory apparatus such as an SSD, or a navigation apparatus which can be mounted on a car or carried with by a user.

The sink device 301 comprises, for example, a television receiver which reproduces video signals and voice or audio signals, or a monitor apparatus (display) which displays video signals and a loudspeaker which reproduces voice or audio signals.

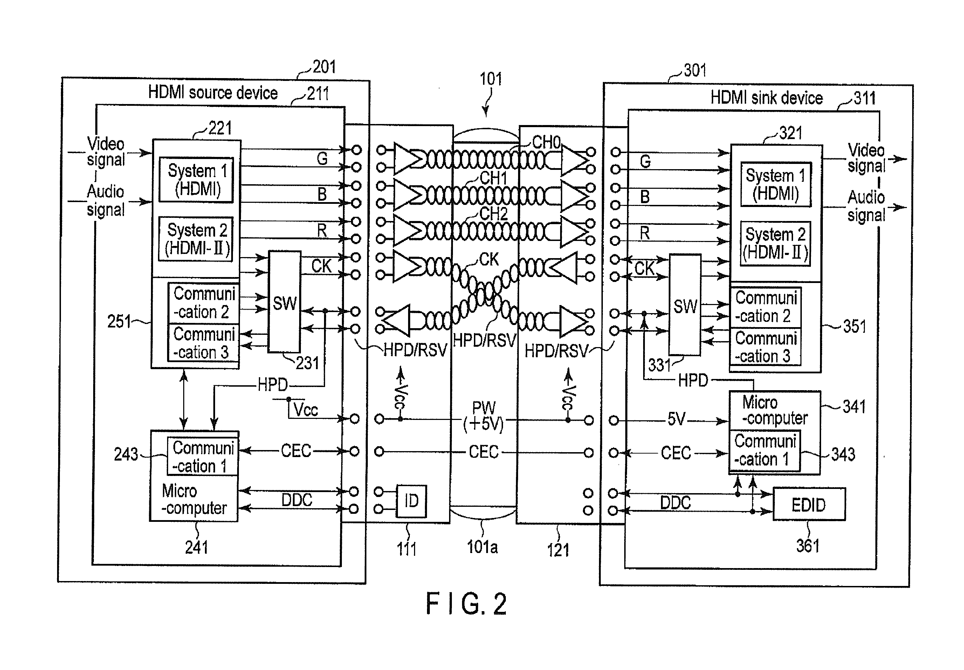

FIG. 2 shows an example of signal transfer by the cable body 101a in the bidirectional communication interface 101 schematically shown in FIG. 1, the first connector 111 connected to the source device 201, and the second connector 121 connected to the sink device 301.

The bidirectional communication interface 101 comprises, at least, first to third channels CH0, CH1, and CH2 each defined by twisted (paired) lines, clock lines CK, and HPD/RSV lines configured by twisting a hot-plug-detected line (HPD) and a reserve (RSV) line. Individuals of the channels (lead lines), CK lines, and HPD/RSV lines each function as a transfer path (communication path/signal line) which transfers a predetermined signal.

The first to third channels CH0, CH1, and CH2 respectively correspond to color components of green (G), blue (B), and red (R) of an image signal. Further, in order that the clock (CK) lines and HPD/RSV lines are connected respectively to HPD/RSV terminals and CK terminals, by the first connector 111 and the second connector 121, the CK lines and the HPD/RSV lines are connected to these terminals which differ from what these lines originally are to be connected to. On the other side, the HPD line conforms to the existing High-definition Digital Media Interface (HDMI) standards, and is a signal line used for detecting a target apparatus to be connected to. Further, the RSV line is prepared according to the standard of the bidirectional communication interface 101.

The bidirectional communication interface 101 comprises, for example, a power line (PW) capable of supplying a power of +5 V from a power supply (Vcc) comprised in the source-side (first) connector 111 to the sink-side (second) connector 121, and a CEC line according to the existing HDMI Consumer Electronics Control (HDMI-CEC) standards.

With respect to an audio signal and a video signal (A/V signal), a connector 211 of the source device 201 comprises a transmitter 221 which performs signal transfer depending on either system 1 or system 2, a switch (SW) 231 to switch transmission according to system 1 and system 2, and a microcomputer 241 which controls switching by the switch 231.

System 1 is a transfer method (standard) according to the existing HDMI standards which will be hereinafter referred to as HDMI or HDMI1.

System 2 is a transfer method based on a prerequisite of a standard according to the existing HDMI standards and more improves in signal transfer speed than according to the existing HDMI standards. System 2 will be hereinafter simply referred to as HDMI-II or HDMI-TYPE2 or TYPE2.

The switch 231 is used to also switch communication modes (communication 2 using a communication block 2 and communication 3 using a communication block 3) to be applied to the communication section 251 which receives signals from the sink device 301, in accordance with an instruction from the microcomputer 241. Further, the microcomputer 241 comprises, integrally or as firmware, a communication section 243 capable of transmission/reception in a communication mode (the communication 1 using the communication block 1) through the CEC line. The microcomputer 241 obtains a HPD signal supplied from the sink device 301 before the switch 231 (on the side of the sink device 301) and can understand characteristics and a state of the sink device 301.

A connector 311 of the sink device 301 comprises a receiver 321 which receives a signal transferred from the source device 201 in accordance with either system 1 or system 2 and receives audio and video signals, a switch (SW) 331 which switches the receiver 321 to system 1 or system 2 in response to a signal transferred from the source device 201, and a microcomputer 341 which controls switching by the switch 331. The switch 331 is used to also switch communication modes (the communication 2 using the communication block 2 and the communication 3 using the communication block 3) to be applied to the communication section 351 which receives signals from the sink device 301, in accordance with an instruction from the microcomputer 341. Further, the microcomputer 341 comprises, integrally or as firmware, a communication section 343 capable of transmission/reception in a communication mode (the communication 1 using the communication block 1) through the CEC line. The microcomputer 341 supplies a HPD signal to a pre-stage before the switch 331 (on the side of the signal transfer path 101) in a manner that the source device 201 can obtain the signal.

The connector 311 of the sink device 301 comprises an EDID section 361 which retains own video-reproduction ability information (performance) in a manner that extended display identification data (EDID [performance information]) for allowing the side of the source device 201 to determine own performance (reproduction ability) of the sink device 301 can be transferred to the source device 201. That is, in accordance with a read command from the source device 201, the EDID section 361 supplies the source device 201 with information that, for example, a receivable timing for (the video signal of) the sink device (television apparatus) 301 is, for example, up to "1080p (parallel)".

In the foregoing bidirectional communication interface 101, as will be specifically described later, a test signal is output through the CK terminals from the connector 211 on the side of the source device 201 to the connector 311 on the side of the sink device 301, by the communication 2 using the communication block 2 of the communication section 251. At this time, the clock CK used in accordance with the HDMI (system 1) is shut off by the switch 231.

The test signal from the source device 201 is input to the HPD/RSV terminals of the connector 311 on the side of the sink device 301 since the CK lines of the cable (transfer path) 101a and the HPD/RSV lines are twisted.

The connector 311 of the sink device 301 transfers the test signal received by the HPD/RSV terminals to the CK terminals by the communication 2 of the communication section 251, and outputs the test signal from the CK terminals to the connector 211 of the source device 201.

The connector 211 of the source device 201 receives the test signal from the sink device 301, which is received through the switch 231, by the own HPD/RSV terminals.

That is, when the test signal which is received by the HPD/RSV terminals of the connector 211 of the source device 201 is detected to be a test signal which the communication block 2 of the communication section 251 has output toward the connector 311 of the sink device 301 through the CK terminals, the source device 201 verifies two features below:
(a) The partner apparatus (sink device 301) has a new communication function capable of signal transfer according to system 2 (HDMI-II/TYPE2);
(b) The cable 101a (interface 101) is capable of signal transfer according to the new system 2 (HDMI-II); and
   a determination can be made on that communication (system 2 [HDMI-II]) different from a communication standard (signal transfer standard) different from the existing HDMI (system 1) standard defined by the present proposal.

More specifically, as will be described below and shown in FIG. 4:
the verification of the two features described above (a check on capability of communication according to system 2 [HDMI-II]) outputs a test signal from the CK terminals of the connector 211 on the side of the source device 201 [401];
the connector 311 of the sink device 301 receives (detects) the test signal through the HPD/RSV terminals (from the source device 201) [402];
the sink device 301 transfers the received test signal to the CK terminals in the same connector 311 by the switch 331 in the connector 311 [403];
the connector 311 of the sink device 301 transmits the test signal (received from the HPD/RSV terminals) from the CK terminals [404];
the connector 211 of the source device 201 receives the test signal through the HPD/RSV terminals from the sink device 301 [405];
the source device 201 determines, by the communication section 251 and the microcomputer 241, whether the received test signal is the same as the test signal transmitted first from the CK terminals or not (i.e., uniqueness therebetween) [406]; and
when the received test signal is determined to be the same as the test signal transmitted first from the CK terminals, the source device 201 determines that signal transfer according to system 2 (HDMI-II) is possible [407] and
the verification as described above is carried out, and signal transfer is performed in accordance with a result determined by the determination [407].

In the sink device 301, the power supply of the sink device 301 may be off (i.e., the sink device 301 need not be on) on a prerequisite that the switch 331 of the connector 311 is operating.

A check for possibility of the communication according to the foregoing system 2 can be also made by changing an order of a partial procedure and a direction of signal transmission when the power supply of the sink device 301 is on and when the power supply of the source device 201 is off, although there has been disclosed an example of making an inquiry (transmission of the test signal or a check of presence or absence of the communication block 2 through the CEC line) from the source device 201 when the power supply of the sink device 301 is off.

When the power supplies of the sink device and the source device each are on, the foregoing check for possibility of communication according to system 2 differs only in that the apparatus which has received the test signal can perform the communication block 2 (communication 2). To make a check that the communication block 2 (communication 2) can be performed by the test signal stays substantially unchanged.

As described above, if a signal is transferred from the source device 201 to the sink device 301 according to system 2 (HDMI-II) defined by the present proposal, a detection that the partner apparatus (sink device 301) comprises the communication block 2 and that the bound cable 101a is applicable to the communication according to the communication 2 (different from the existing HDMI [system 2]), prior to start of communication using the communication block 2 (communication 2) is determined that the communication according to the communication 2 is possible when a test signal is generated from the communication block 2 (communication section 251) and is sent from the CK terminals through the switch 231 and when the test signal transmitted from the HPD/RSV terminals or a corresponding response signal thereto is received from the sink device 301.

When the communication section 251 (on the side of the source device 201) and communication section 351 (on the side of the sink device 301) verify the two features described above by the test signal and when the communication (signal transfer) according to a communication standard different from system 1 (existing HDMI) is determined to be possible, signal transfer equivalent to the existing HDMI or, namely, transmission of the EDID information to the side of the source device, exchange of encryption/decryption information for a copyright protection function, signal transfer through a HDMI Ethernet channel (HEC), and CEC communication by the communication 1 using the communication block 1 are shared by using both the communication block 2 (communication 2) and the communication block 3 (communication 3) between the communication section 251 (source device) and the communication section 351 (sink device).

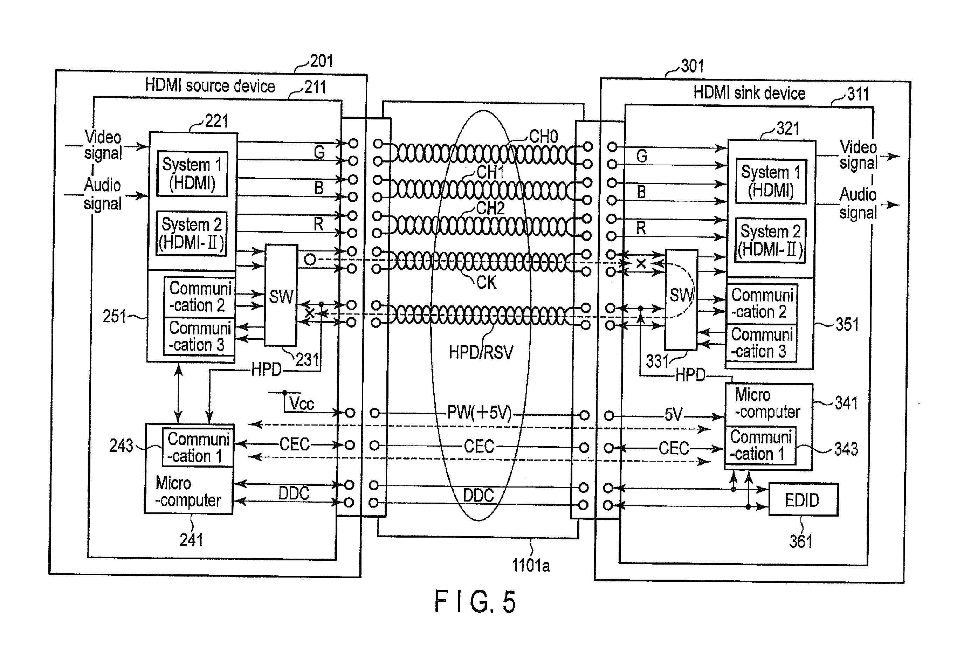

As shown in FIG. 5, the source device 201 and the sink device 301 can be connected by an existing HDMI cable 1101a. In this case, signal transfer according to the existing HDMI standards in system 1 is possible.

Conversely, the apparatuses capable of signal transfer according to system 2 are connected to each other. Therefore, when the test signal from the HPD/RSV terminals or a corresponding response signal thereto can be detected to be not receivable (i.e., the test signal is not returned because the CK lines and the HPD/RSV lines are not twisted), as a result of verification on the foregoing two features, whether the communication uses the communication 1 (according to the existing CEC standards) and the partner apparatus comprises the communication block 2 by a test communication signal (new communication command) by, for example, a vendor command or not (whether signal transfer by the communication block 2 is possible or not) is detected.

Hereinafter, when the partner apparatus is detected to comprise no communication block 2 by the communication (test communication signal) using the communication 1 (existing CEC communication), the existing HDMI communication is performed.

Otherwise, when the partner apparatus is detected to comprise the communication block 2 by the communication using the communication 1, the user is notified of possibility of communication according to system 2 and of replacement to be made from the cable (transfer path) 1101a to a cable (the cable 101a shown in FIG. 1) compatible with system 2. In this case, a solution can be provided by displaying a message concerning cables on a video display section of the sink device 301 through a graphical user interface (GUI).

The cable 101a has a terminal shape connectable to a receptacle to which the existing HDMI cable 1101a can be connected.

In the foregoing cable 1101a, G, B, and R terminals, CK terminals, and HPD terminals of the connectors at two ends of the cable are respectively are connected respectively to the G, B, and R (CH0, CH1 and CH2) terminals, CK terminals, and HPD terminals of the corresponding receptacles, when the connectors are connected to the receptacles of the source device and sink device.

On the other side, in the connector 111 of the cable 101a, G, B, and R terminals are provided at respective positions of the G, B, and R terminals of the existing cable 1101a, first terminals are provided at positions of the CK terminals of the existing cable, and second terminals are provided at positions of the HPD terminals of the existing cable. Further, in the connector 121 of the cable 101a, G, B, and R terminals are provided at positions of the G, B, and R terminals of the existing cable 1101a, third terminals are provided at positions of the CK terminals of the existing cable, and fourth terminals are provided at positions of the HPD terminals of the existing cable. Further in the cable 107a, there are provided leads (signal lines) connecting the G, B, and R terminals between two ends of the cable, a lead (signal line) connecting the first and fourth terminals to each other, a lead connecting the first and fourth terminals to each other, and a lead (signal) connecting the second and third terminals to each other. That is, when the cable 101a is connected to the sink and source devices, the cable 101a respectively connects G, B, and R terminals of the source device and G, B, and R terminals of the sink device, connects the HPD terminals of the source device 201 and the CK terminals of the sink device, and connects the CK terminals of the source device and the HPD terminals of the sink device.

In this case, information acquisition according to the communication 1 by use of the CEC line and performance of the partner by the EDID conform to the existing HDMI standards. Further, HPD processing (a response to a read request from a source device) inside the partner apparatus is performed by a microcomputer 1341 and an interface (IF3) 1345.

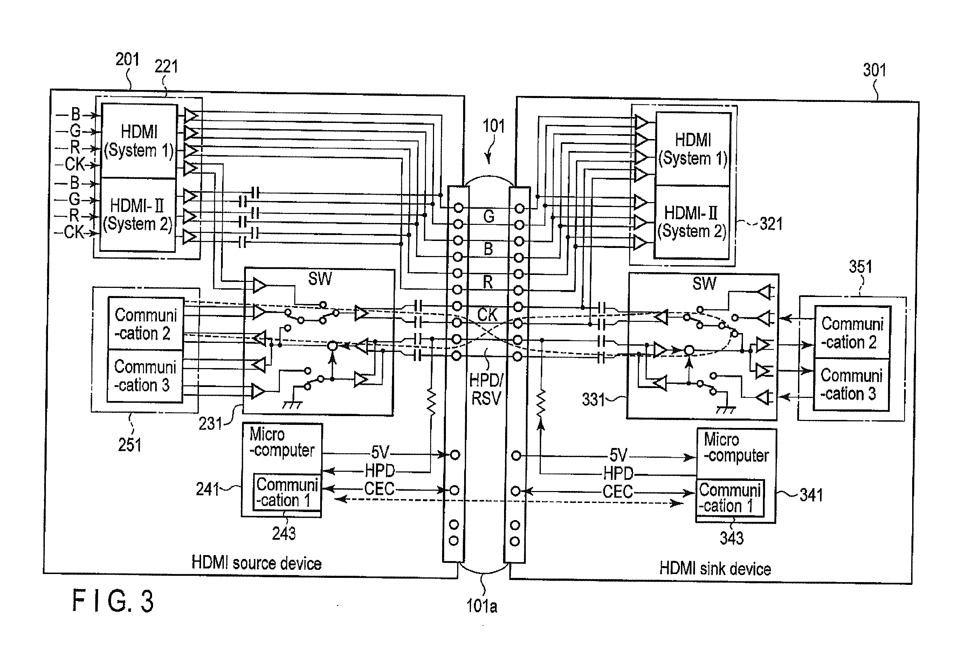

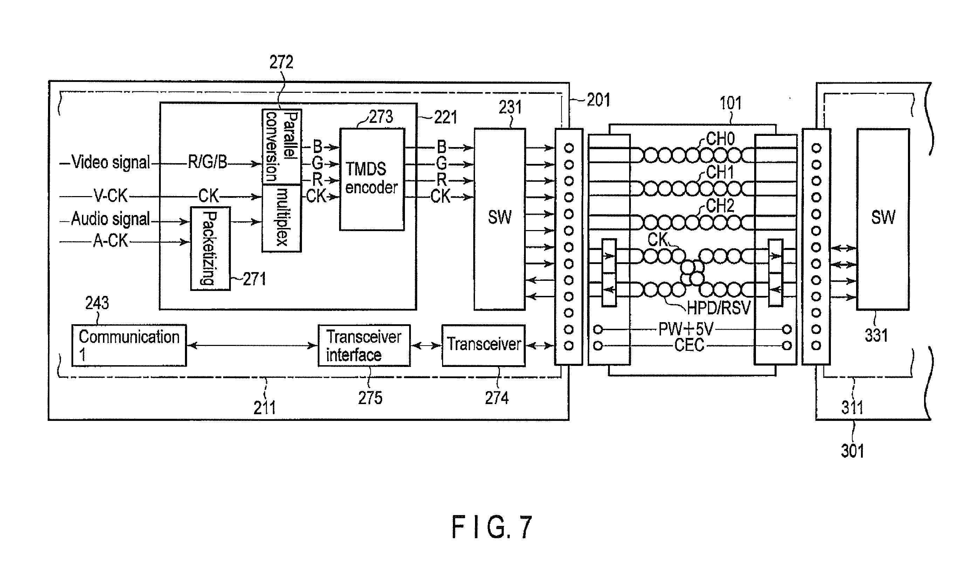

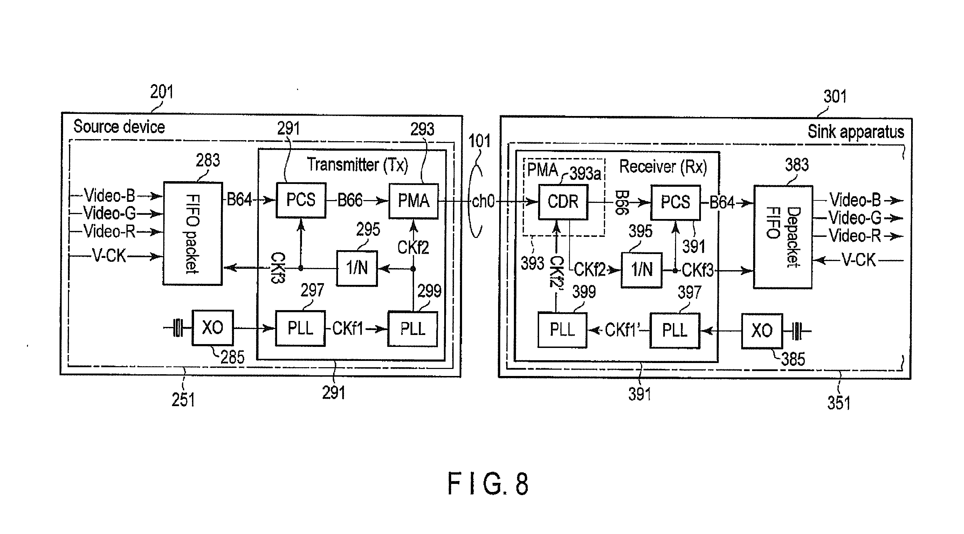

FIGS. 7 and 8 show a desirable example of a communication system to which system 2 shown in FIG. 2 (FIG. 3) according to the present proposal is applicable.

In FIG. 7, between the communication section 251 of the source device 201 and the communication section 351 of the sink device 301, an output from the transmission section 221 of the connector 211 on the side of the source device 201 is output to a terminal section through the switch 231 at the time of signal transfer according to system 2, and is input to the cable body 101a through the first connector 111 of the bidirectional communication interface 101.

That is, at the time of transmission according to system 2, a voice signal is packetized by the packetizing processor 271, and time-multiplexed on a blanking period of a video signal (B/G/R). Each of R, G, and B signals forming a video signal are converted into parallel signals in a pre-stage before a transition-minimized differential signaling (TMDS) encoder 273 (by a parallel converter 272), thereby converted from 8-bit signals into 10-bit ones, and thereafter converted into serial data.

An output of the TMDS encoder 273 is amplified to a predetermined intensity by an amplifier/waveform equalizer included in the switch 231, and is input to the connector 311 of the sink device 301 through the first to third channels CH0, CH1, and CH2 of the cable body 101a and the clock lines CK. When the switch 231 comprises the waveform equalizer, an extent of equality between waveforms is evaluated when required. Accordingly, deterioration of transferred signals or influence on determination performance (which causes deterioration in determination capability, as a result) can be restricted with respect to high-speed transfer or long-distance transfer.

In the sink device 301, a signal transferred in accordance with system 2 is input to the receiver 321 through the switch 231, and is decoded into a video signal and a voice signal by the receiver 321 and a processor in a post-stage thereof.

Specifically, compared with the existing HDMI (system 1), application of system 2 results in features describes below:
a) Signal data can also be transferred by the clock lines CK; and
b) The first to third channels CH0, CH1, and CH2 transfer signal data which can reproduce the clock,
therefore, the speed of signal transfer from the source device 201 to the sink device 301 can be improved.

In addition, the CEC line performs the communication block 1 through a transceiver 274 and a transceiver interface 275.

By providing the switch (which can include an amplifier) 231 for the bidirectional communication interface 101 (cable body 101a) compatible with the embodiment disclosed as system 2, for example, high-speed communication is possible under constant conditions without requiring a static/dynamic waveform equalizer which is recommended for the 10-gigabit Ethernet (10GbE). Further, an amplifier may be omitted if a transfer distance can be limited to a constant distance as an upper limit of, e.g., one meter or so.

FIG. 8 shows an example which enables communication transfer at a higher speed with respect to system 2 in the bidirectional communication described with reference to FIG. 2 and FIG. 3. By using a transfer system as described below with reference to FIG. 8, data and a clock can be transferred through a single path. FIG. 8 also picks up and illustrates a transmitter (Tx) block and a receiver (Rx) block with respect to a PMA block 393 and a CDR section 393a on the side of the sink device 301.

In the 10-gigabit Ethernet (10GbE) class standardized already under the Institute of Electrical and Electronics Engineers (IEEE) 802.3ae standard, a video signal B transmitted from the source device 201 to the sink device 301 is subjected to speed conversion into a 64-bit parallel signal and bit-parallel conversion in an asynchronous high-speed memory (FIFO) and a packetizing block 283. The signal is further converted into a 66-bit one by a physical coding sublayer (PCS) block 291 of the transmitter positioned in a next stage, is thereafter converted into serial data by a physical medium attachment (PMA) block 293, and is transferred to the side of the sink device.

On the side of the sink device 301, serial data received by the receiver (Rx) is converted into 66-bit parallel data by the PMA block 393 comprising the clock-data recovery (CDR) section 393a, and is reverse-converted into 64-bit data by the PCS block 391 (66/64 conversion). The clock and data information converted into 64-bit data by the PCS block 391 is subjected to speed conversion and bit-parallel conversion into a video signal B by depacketizing processing and asynchronous high-speed memory (FIFO) block 383. The G and R signals each are substantially the same as the B signal, and a description thereof will be omitted.

The PCS block 391 also performs coding and scramble processing on data or, namely, communication information. The PCS block 391 on the side of the sink device 301 performs a scramble processing and decoding on data.

The CDR section 393a restores original of an input signal data from the input signal.

The PMA block 293 provides a local area network (LAN) function and obtains a media access control (MAC) address from the sink device 301, and specifies a data transmission destination, i.e., a partner apparatus. Similarly, the PMA block 293 on the side of the sink device 301 recognizes the source device 201 as a transmission source.

More specifically, a reference clock is generated by a quartz oscillator and an oscillator (XO) 285 on the side of the source device 201. A phased lock loop (PLL) section 297 generates a clock at 156.25 MHz (CKf2), and a next (next stage) PLL section 299 generates a clock (CKf2) at 5.15625 GHz. A frequency divider (1/N) 295 generates a clock (CKf2) at 156.25 MHz as a 1/33 clock of the clock (CKf2). The clock line CKf2 is used for 64/66 conversion by a PCS block 261. The clock line CKf3 is used for driving the FIFO/packetizing block 283 and the PCS block 291.

Meanwhile, on the side of the sink device 301, a reference clock is generated by the quartz oscillator and the oscillator (XO) 385, and a PLL section 397 generates a clock at 156.25 MHz (referred to as CKf1' because of a difference from the side of the source device). A next (next stage) PLL section 399 generates a clock at 5.15625 GHz (similarly referred to as CKf2'). The CDR section 393a (in the PMA block 363) follows a change point of received data on the basis of the clock CKf2', generates a clock (CKf2) equal to a frequency on the side of the source device 201, and simultaneously performs a processing on data.

Thereafter, a processing which is a reverse to that performed on the side of the source device 201 is performed as the FIFO/depacketing block 383 and PCS block 391 are driven with use of the 1/33 clock (CKf3) at 156.25 MHz obtained by dividing the clock (CKf2) output from the CDR section 393a by a frequency divider (1/N) 395. The G and R signals each are substantially the same as the B signal, and a description thereof will be omitted.

Thus, in a configuration shown in FIG. 8, data and a clock can be transferred through a single line, and high-speed communication can be expected in view of the 100 gigabit Ethernet (GbE) at a higher speed than communication according to the 10 gigabit Ethernet (10GbE).

Thus, in FIG. 8, in place of the PMA blocks (comprising the CDR sections) of the receivers (Rx), a waveform equalization technology of a decision feedback equalizer (DFE) adaptive type can be employed.

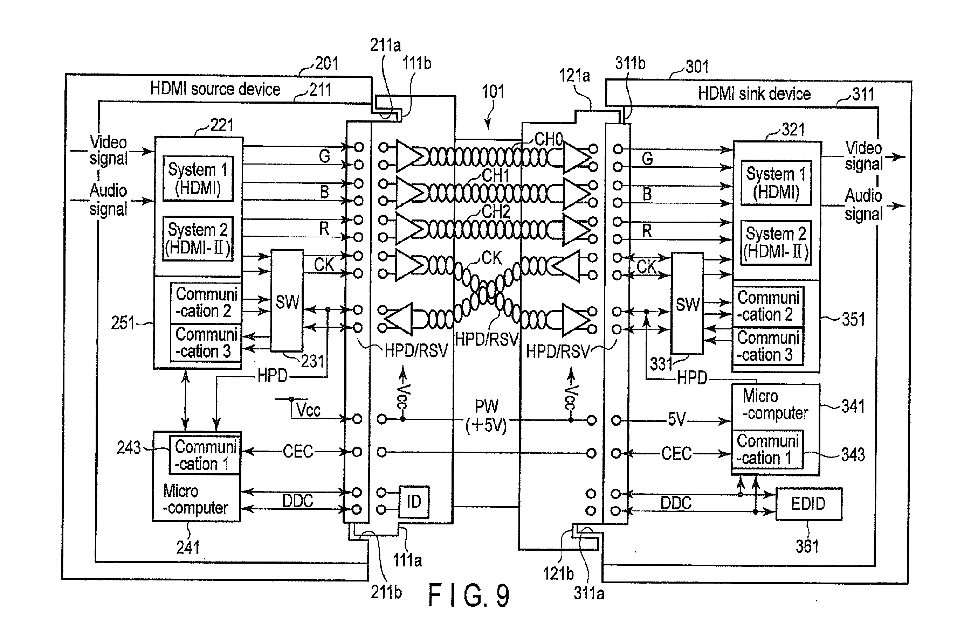

FIG. 9 shows an example of application of a configuration capable of clarifying directivity and of substantially avoiding connection in a reverse direction at the time of attaching to/detaching from an apparatus as a connection target, for each of the side to be connected to the connector 211 of the source device 201, i.e., the connector 111, and the side to be connected to the connector 311 of the sink device 301, i.e., the connector 121, in the bidirectional communication interface 101 shown in FIG. 2. The signal processing system and the signal transfer system are the same as those described with reference to FIG. 2 (FIG. 3), and descriptions thereof will be omitted.

As shown in FIG. 9, the bidirectional communication interface 101 has directivity depending on recognition of the first connector 111 connected to a source device and the second connector 121 connected to a sink device. Therefore, the first connector 111 comprises a convex part 111a and a concave part 111b which can be connected only to the connector 211 of the source device 201. The connector 211 of the source device 201 comprises a concave part 211b to be connected to the convex part 111a of the first connector 111, and a convex part 211a to be connected to the concave part 111b of the first connector 111.

Therefore, the second connector 121 comprises a convex part 121a and a concave part 121b which can be connected only to the connector 311 of the sink device 301. Accordingly, the connector 311 of the sink device 301 comprises a concave part 311b to be connected to the convex part 121a of the second connector 121, and a convex part 311a to be connected to the concave part 121b of the second connector 121.

The convex parts and concave parts each may have an arbitrary shape insofar as directivity of the bidirectional communication interface 101 can be indicated and connection in a reverse direction can be avoided. Combinations with the concave parts may be freely set.

Each of the connectors at two ends of the cable 101a may be constructed in a configuration as described above which is capable of clarifying directivity and of substantially avoiding connection in a reverse direction at the time of attaching to/detaching from (insertion/connection) a apparatus as a target of connection between the convex part and the concave part having arbitrary shapes. Thereby, the cable body 101a capable of signal transfer according to system 2 (HDMI-II) is configured to be not connectable to the cable 1101a capable of signal transfer only according to system 1, occurrence of a connection error can be prevented. Further, since directivity can be clear, to the load on the user does not increase.

In the present embodiment as described above, the channel of the clock lines CK can perform high-speed communication transfer compatible with a transfer system referred to as system 2 (HDMI-II) which transfers also signal data. In case of system 2, signal data capable of reproducing a clock can be transferred simultaneously together through a signal channel.

The load on the user does not increase since a determination on either system 1 or system 2 can be automatically made by using features of shapes of connectors attached to an interface (cable body).

## Claims

1. A bidirectional communication interface apparatus (101) **characterized by** comprising:
a first transfer path (CHO, CH1, CH2) configured to guide a video signal and a control signal from a transmitting-side apparatus to a receiving-side apparatus, wherein the video signal and control signal are transferred according to a first transfer method or a second transfer method, and wherein the first transfer method is different from the second transfer method;
a second transfer path (CK) independent from the first transfer path, configured to guide a clock signal from the transmitting-side apparatus to the receiving-side apparatus independently from the first transfer path; and
a third transfer path (HPD/RSV) independent from the first transfer path and integrated with the second transfer path, configured to transfer a first signal from the transmitting-side apparatus to the receiving-side apparatus or from the receiving-side apparatus to the transmitting-side apparatus, wherein the first signal is configured to be transferred in a manner that a possibility of transfer of a video signal in accordance with the second transfer method can be detected by receiving the first signal, wherein the first signal is configured to be supplied to a connection section of the third transfer path of the receiving-side apparatus through the second transfer path from the transmitting-side apparatus, wherein the first signal is configured to be output from an output end of the second transfer path of the receiving-side apparatus, and wherein the first signal is configured to be input to a connection section of the second transfer path of the transmitting-side apparatus.

2. The bidirectional communication interface apparatus of claim 1, **characterized in that**
the second transfer path and the third transfer path are twisted.

3. The bidirectional communication interface apparatus of claim 2, **characterized in that**
the first transfer path, the second transfer path, and the third transfer path are held by a single connector at each of a transmitting connection end and a receiving connection end.

4. The bidirectional communication interface apparatus of claim 3, **characterized in that**
the connectors are configured to not allow the transmitting connection end and the receiving connection end to connect each other.

5. A transmitter apparatus (201) **characterized by** comprising:
a transmitter (211) configured to transmit a video signal in accordance with either a first transfer method for transferring the video signal or a second transfer method for transferring the video signal, wherein the second transfer method is at a higher speed than the first transfer method;
a communication module (251) configured to transmit an identification signal independently from the video signal transmitted by the transmitter, the communication module further configured to receive the identification signal returned from a partner apparatus or a response signal in place of the identification signal; and
a multiplexed transfer path (HPD/RSV, CK), integrated by twisting with a signal transfer path connected to an input end of the partner apparatus different from a clock signal input end of the partner apparatus, wherein the multiplexed transfer path is configured to provide a clock signal from the communication module.

6. The transmitter apparatus of claim 5, **characterized by** further comprising:
a separation module (231) configured to separate the clock signal transmitted integrally with the video signal, if the transmitter is configured to transmit the identification signal through the communication module.

7. The transmitter apparatus of claim 6, **characterized in that**
the separation module is configured to stop transmission of the clock signal to a partner apparatus if the communication module is configured to transmit the identification signal.

8. The transmitter apparatus of claim 6, **characterized in that**
the communication module is configured to receive the identification signal returned from the partner apparatus or a response signal in place of the identification signal through the separation module.

9. The transmitter apparatus of claim 8, **characterized in that**
the communication module is configured to receive the identification signal or the response signal returned from the partner apparatus through an input end different from a terminal used for outputting the identification signal.

10. A receiver (301) apparatus **characterized by** comprising:
a receiver (321) configured to receive a video signal transferred in accordance with a first transfer method or a second transfer method, wherein the second transfer method is at a higher transfer speed than the first transfer method;
a communication module (351) configured to receive an identification signal independently from a video signal transmitted by a partner apparatus, the communication module configured to transmit the identification signal or a response signal; and
a multiplexed transfer path (HPD/RSV, CK), integrated by twisting with one of the signal transfer paths to different input ends, the multiplexed transfer path configured to supply the identification signal from the partner apparatus to an input end different from a terminal to transmit the response signal in place of the identification signal.

11. The receiver apparatus of claim 10, **characterized by** further comprising:
a separation module (331) configured to separate a clock signal received integrally with the video signal by the receiver when the receiver receives the identification signal through the communication section.

12. The receiver apparatus of claim 9, **characterized in that**
the separation module is configured to stop receiving a clock signal from the partner apparatus if the identification signal or a response signal in place of the identification signal is transmitted by the communication module.

13. The receiver apparatus of claim 11, **characterized in that**
the communication module is configured to receive the identification signal input through the multiplexed transfer path from the partner apparatus by the separation module.

14. The receiver apparatus of claim 11, **characterized in that**
the communication module is configured to receive the identification signal output from a clock signal output end of the partner apparatus and returned through the multiplexed transfer path by a receiving end different from a terminal for outputting the identification signal.

15. A signal transfer method **characterized by** comprising:
transferring a video signal according to a first standard, wherein a transfer speed of the first standard differs from a transfer speed of a video signal according to a high-definition digital media interface (HDMI) standard, to a first transfer path to transfer the video signal, through second and third transfer paths independent from the first transfer path, **characterized in that**
through the second transfer path, a first signal is input to an input end of a receiving-side apparatus to the third transfer path, and the first signal or a response signal corresponding to the first signal is output from an output end to the second transfer path from the receiving-side apparatus,
through the third transfer path, the predetermined signal or the response signal corresponding to the predetermined signal is received by an input end of the third transfer path of the transmitting-side apparatus, and
through the first transfer path, the video signal according to the first standard is transferred.

16. The signal transfer method of claim 15, **characterized in that**
the second transfer path and the third transfer path are twisted mutually and integrated with each other.

17. A signal transfer system **characterized by** comprising:
supplying a control signal from a first control-signal transfer path in an output apparatus, wherein the output apparatus outputs a video signal in accordance with a first transfer method and a second transfer method, wherein the second transfer method is different from the first transfer method, to a receiver apparatus through a multiplexed transfer path whose control-signal transfer paths of two systems are twisted, **characterized in that** the multiplexed transfer path is to input the control signal to a second control-signal transfer path in a receiver apparatus, **characterized in that** the receiver apparatus receives the video signal in accordance with the first transfer method and the second transfer method;
receiving the control signal through the multiplexed transfer path or a response to the control signal by the second control-signal transfer path in the output apparatus; and
supplying a video signal according to the second transfer method from the output apparatus to the receiver apparatus.
